# EUROPEAN PATENT APPLICATION

(11) **EP 4 446 215 A1**
(43) Date of publication of application: **16.10.2024**
(21) Application number: 24161646.5
(22) Date of filing: 06.03.2024
(51) Int. Cl.: B63B 59/08

(54) **UNDERWATER CLEANING APPARATUS**

(30) Priority: 23.03.2023 JP 2023046409
(71) Applicant: Yanmar Holdings Co., Ltd., Osaka-shi, Osaka (JP)
(72) Inventor: SUZUKI, Akihiro, Osaka-shi (JP); MASUZAKI, Chikara, Kunisaki-shi (JP); KANDA, Koichi, Kunisaki-shi (JP)
(74) Representative: Dennemeyer & Associates S.A.

(57) **Abstract**

[Problem] The present invention provides a technique capable of appropriately and automatically cleaning a bottom surface of a cleaning target under water.

[Solution] An exemplary underwater cleaning apparatus includes: a cleaning machine that cleans a cleaning target while moving under water; a posture sensor that detects a posture of the cleaning machine; and a controller that executes movement control for the cleaning machine on the basis of information acquired from the posture sensor. The controller determines a boundary between a bottom surface and a side surface of the cleaning target on the basis of a pitch angle of the cleaning machine acquired from the posture sensor.

## Description

### TECHNICAL FIELD

The present invention relates to an underwater cleaning apparatus.

### BACKGROUND ART

Conventionally, an autonomous cleaning apparatus has been known (see, for example, Patent Document 1). A cleaning robot disclosed in Patent Document 1 travels by a travel unit that can be steered and driven, and cleans a cleaning area on a bottom surface of a water tank or the like. The cleaning robot is configured to include: an ultrasonic oscillator that emits an ultrasonic wave toward a boundary wall surface of the cleaning area; a receiver that receives a reflected wave of the ultrasonic wave; and a controller that generates a control signal according to the reflected wave that has been received by the receiver, the control signal being used to drive the travel unit.

### PRIOR ART DOCUMENT

### PATENT DOCUMENT

Patent Document 1: Japanese Patent No. 2882356

### SUMMARY OF INVENTION

### TECHNICAL PROBLEM

For example, a chemical fiber aquaculture net that is placed in the sea or the like has an unfixed shape. In the case where a cleaning target has an unfixed shape, a distance from the cleaning robot to the boundary wall surface (a side surface) may be inconstant. Thus, it is difficult to accurately measure the distance to the boundary wall surface by using the ultrasonic wave. When the accurate distance to the boundary wall surface cannot be measured, there is a possibility of an unwashed area and/or reduced cleaning efficiency.

An object of the present invention is to provide a technique capable of appropriately and automatically cleaning a bottom surface of a cleaning target under water.

### SOLUTION TO PROBLEM

An exemplary underwater cleaning apparatus according to the present invention includes: a cleaning machine that cleans a cleaning target while moving under water; a posture sensor that detects a posture of the cleaning machine; and a controller that executes movement control for the cleaning machine on the basis of information acquired from the posture sensor. The controller determines a boundary between a bottom surface and a side surface of the cleaning target on the basis of a pitch angle of the cleaning machine acquired from the posture sensor.

### ADVANTAGEOUS EFFECTS OF INVENTION

According to the exemplary present invention, it is possible to appropriately and automatically clean the bottom surface of the cleaning target under water.

### BRIEF DESCRIPTION OF DRAWINGS

FIG. 1 is a block diagram illustrating a schematic configuration of an underwater cleaning apparatus.
FIG. 2 is a perspective view illustrating a schematic configuration of a cleaning machine.
FIG. 3 is a schematic perspective view of the cleaning machine as seen in a different direction from that in FIG. 2.
FIG. 4 is a side view illustrating the schematic configuration of the cleaning machine.
FIG. 5 is a view for explaining an example of cleaning an aquaculture net by using the underwater cleaning apparatus.
FIG. 6 is a view for explaining another example of cleaning the aquaculture net by using the underwater cleaning apparatus.
FIG. 7 is a block diagram illustrating functions of a controller that executes a method for automatically cleaning a bottom surface according to a first embodiment.
FIG. 8A is a flowchart illustrating a flow of automatic cleaning processing for the bottom surface that is executed by a controller in the first embodiment.
FIG. 8B is a flowchart illustrating the flow of the automatic cleaning processing for the bottom surface that is executed by the controller in the first embodiment.
FIG. 9 is a schematic view for explaining movement control for the cleaning machine at the time of automatically cleaning the bottom surface of the aquaculture net.
FIG. 10 is a schematic view for explaining an end determination on the cleaning processing of the bottom surface.
FIG. 11 is a block diagram illustrating functions of a controller that executes a method for automatically cleaning a bottom surface according to a second embodiment.
FIG. 12 is a flowchart illustrating a flow of automatic cleaning processing on the bottom surface that is executed by the controller in the second embodiment.
FIG. 13 includes views schematically illustrating overview of the automatic cleaning processing on the bottom surface according to the second embodiment.
FIG. 14A is a schematic view for explaining a problem that occurs at the time of a direction change.
FIG. 14B is a schematic view for explaining reference information related to FIG. 14A.
FIG. 14C is a view for explaining a method for avoiding the problem that possibly occurs at the time of the direction change.
FIG. 15A includes schematic views illustrating a posture transition of the cleaning machine in a machine body coordinate system.
FIG. 15B includes schematic views illustrating a posture transition of the cleaning machine in a fixed coordinate system.
FIG. 16A is a schematic view for explaining a travel route at the time when the cleaning machine changes the direction.
FIG. 16B is a schematic view for explaining a travel route at the time when the cleaning machine changes the direction.

### DESCRIPTION OF EMBODIMENTS

A detailed description will hereinafter be made on exemplary embodiments of the present invention with reference to the drawings. Directions in the description of a cleaning machine provided to an underwater cleaning apparatus are based on an x-y-z coordinate system that is a three-dimensional orthogonal coordinate system illustrated in the drawings. In the following description, an x-direction, a y-direction, and a z-direction in this x-y-z coordinate system will respectively be set as a front-rear direction, a right-left direction, and an up-down direction. Here, a +x-side and a -x side will respectively be set as a front side and a rear side. A +y-side and a -y side will respectively be set as a left side and a right side. The left side and the right side are set as seen forward from the rear. A +z-side and a -z side will respectively be set as an upside and a downside. In addition, in regard to a turning direction of the cleaning machine, expressions such as a clockwise direction (a right-handed direction) and a counterclockwise direction (a left-handed direction) will be used on the assumption that the cleaning machine is seen in a plan view from the +z-side (an upper side). These directions are merely used for the description and are not intended to limit actual positional relationships or directions.

### 1. Overview of Underwater Cleaning Apparatus

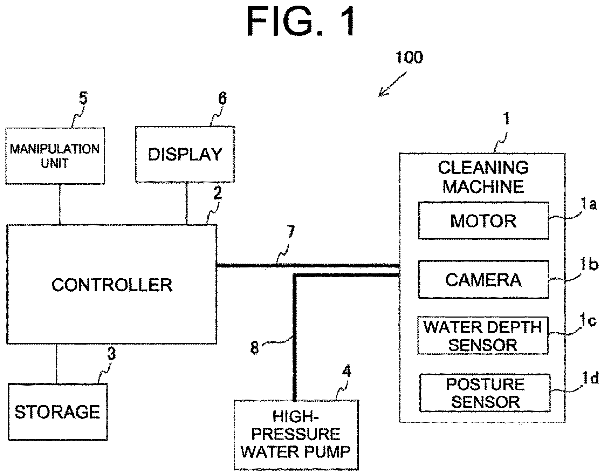

FIG. 1 is a block diagram illustrating a schematic configuration of an underwater cleaning apparatus 100 according to the embodiment of the present invention. The underwater cleaning apparatus 100 is an apparatus for cleaning a cleaning target under water. In the present embodiment, the cleaning target is an aquaculture net. In detail, the aquaculture net is a net constituting an aquaculture pen. The aquaculture net is made of synthetic fiber or metal, for example. For example, the aquaculture net has a bottomed cylindrical shape with 30 m in diameter and 15 m in depth. However, the shape and the size of the aquaculture net can be changed appropriately. The shape of the aquaculture net is not limited to a circular shape in the plan view, and may have another shape such as an oval shape or polygonal shape. The cleaning target is not limited to the aquaculture net, and may be a pool, a water tank, or the like, for example. As illustrated in FIG. 1, the underwater cleaning apparatus 100 includes the cleaning machine 1 and a controller 2. The underwater cleaning apparatus 100 further includes a storage 3, a high-pressure water pump 4, a manipulation unit 5, and a display 6.

The cleaning machine 1 cleans the cleaning target while moving under water. In the present embodiment, the cleaning machine 1 cleans the cleaning target while traveling. The cleaning machine in the present embodiment is an autonomous cleaning machine. However, the cleaning machine 1 may be a machine other than the autonomous cleaning machine. For example, the cleaning machine may be configured to clean the cleaning target while floating or sailing. That is, the cleaning machines in the present invention includes not only the autonomous cleaning machine but also a wide variety of cleaning machines, each of which moves by own power.

As illustrated in FIG. 1, the cleaning machine 1 includes a motor 1a, a camera 1b, a water depth sensor 1c, and a posture sensor 1d. That is, the underwater cleaning apparatus 100 includes the posture sensor 1d. The underwater cleaning apparatus 100 further includes the motor 1a, the camera 1b, and the water depth sensor 1c.

The motor 1a provides drive power with which the cleaning machine 1 travels on the aquaculture net. The camera 1b is provided in a manner capable of imaging a circumstance around the cleaning machine 1. The camera 1b outputs imaging information to the controller 2. The water depth sensor 1c is arranged at an appropriate position of the cleaning machine 1 and is provided to be able to detect a water depth at a position where the cleaning machine 1 is present. In the present embodiment, the water depth sensor 1c is a pressure sensor. The posture sensor 1d detects a posture of the cleaning machine 1. The posture sensor 1d is arranged at an appropriate position of the cleaning machine 1. In the present embodiment, the posture sensor 1d is an inertial measurement unit (IMU). The IMU includes a three-axis angular velocity sensor and a three-axis acceleration sensor. Sensor information that is acquired by the water depth sensor 1c and the posture sensor 1d is output to the controller 2.

The controller 2 controls the entire underwater cleaning apparatus 100. For example, the controller 2 executes movement control for the cleaning machine 1 by controlling operation of the motor 1a. For example, the controller 2 executes the movement control for the cleaning machine 1 on the basis of the information that is acquired from the posture sensor 1d. Details of the movement control using the posture sensor 1d will be described below.

The controller 2 may be, for example, a processor that includes an arithmetic circuit such as a central processing unit (CPU). The controller 2 may include plural processors. In the present embodiment, the controller 2 is arranged at a position other than the cleaning machine 1, such as on land or shipboard. The controller 2 is electrically connected to the cleaning machine 1 by an electric wire bundle 7 that is formed by bundling plural electric wires including, for example, a communication wire and a power supply wire. However, the controller 2 may be arranged in the cleaning machine 1. Alternatively, the controller 2 may be arranged separately in the cleaning machine 1 and at the position other than an underwater position, such as on land or shipboard.

The storage 3 includes volatile memory and non-volatile memory. The volatile memory may include random access memory (RAM), for example. The non-volatile memory may include read only memory (ROM), flash memory, or a hard disk drive, for example. The non-volatile memory may store a computer-readable program and data. The storage 3 may be included in the controller 2 or may be provided as a separate device from the controller 2. Similar to the controller 2, the storage 3 may be arranged in the cleaning machine 1 or may be arranged at a position other than the cleaning machine 1.

The high-pressure water pump 4 supplies high-pressure water to the cleaning machine 1. The high-pressure water pump 4 is arranged on land or shipboard, for example. The high-pressure water pump 4 is connected to the cleaning machine 1 by a hose 8. The cleaning machine 1 cleans the aquaculture net by using the high-pressure water that is supplied from the high-pressure water pump 4 via the hose 8. The cleaning machine 1 may be configured to clean the cleaning target not by using the high-pressure water but by using a brush.

The manipulation unit 5 is connected to the controller 2 either in a wired manner or in a wireless manner. A manipulator who performs cleaning work can issue a command to the controller 2 by using the manipulation unit 5. The manipulation unit 5 enables manual manipulation of the cleaning machine 1. The controller 2 can controls the operation of the cleaning machine 1 in response to an operation command that is issued by the manipulator using the manipulation unit 5. The manipulation unit 5 also enables selection of an operation mode of the cleaning machine 1. In detail, the manipulation unit 5 is provided to enable selection between a manual mode and an automatic mode. When the manual mode is selected, the manipulator can manually manipulate the cleaning machine 1 by using the manipulation unit 5. When the automatic mode is selected, the cleaning machine 1 cleans the aquaculture net while moving automatically. In order to be manipulated by the manipulator, the manipulation unit 5 is arranged on land or shipboard.

The display 6 includes a display device such as a liquid-crystal display and is electrically connected to the controller 2. Similar to the manipulation unit 5, the display 6 is arranged on land or shipboard. The display 6 is provided to be able to display the image captured by the camera 1b, which is provided to the cleaning machine 1, for example. In addition, the display 6 is provided to be able to display an image generated by the controller 2. The display 6 may directly be connected to the camera 1b without interposing the controller 2 therebetween.

### 2. Overview of Cleaning Machine

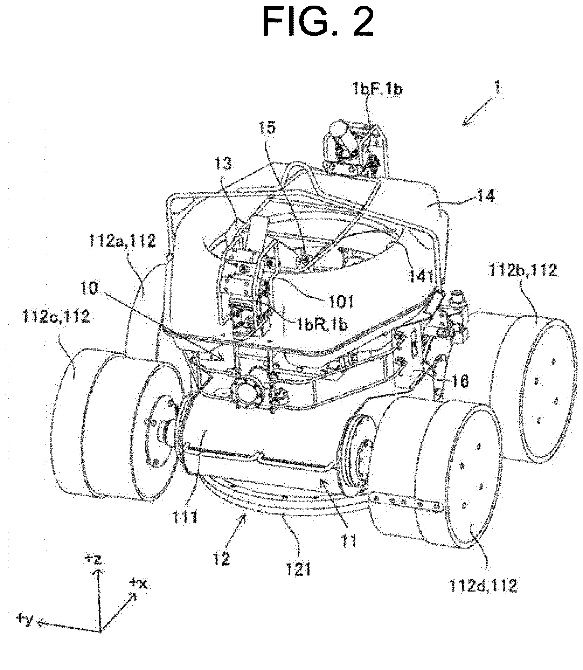

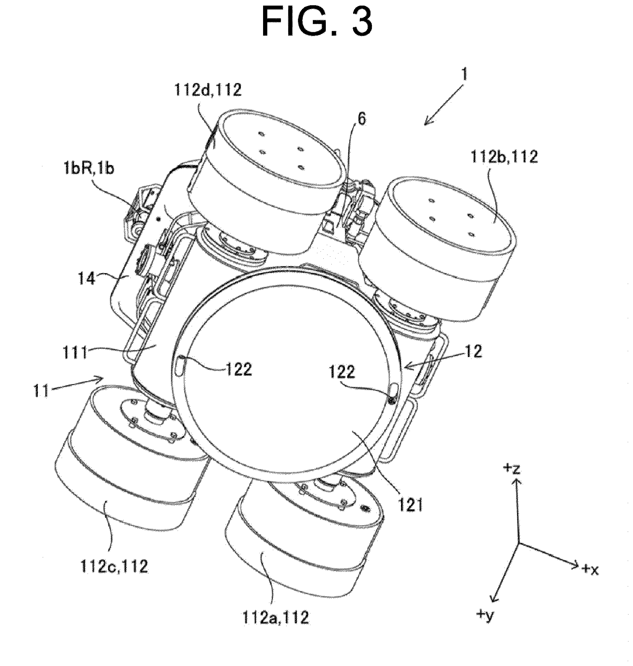

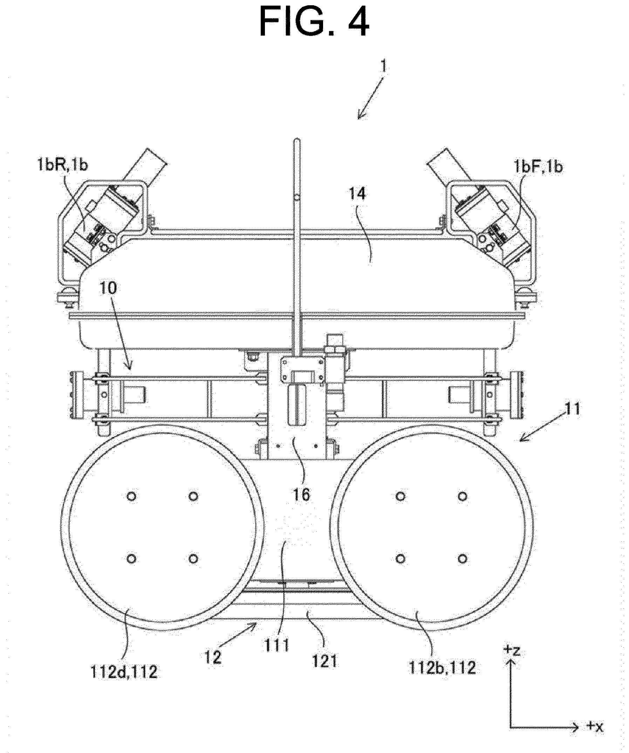

FIG. 2 is a perspective view illustrating a schematic configuration of the cleaning machine 1 according to the embodiment of the present invention. FIG. 3 is a perspective view of the cleaning machine 1 according to the embodiment of the present invention as seen in a different direction from that in FIG. 2. FIG. 2 is a view of the cleaning machine 1 as seen obliquely from above. FIG. 3 is a view of the cleaning machine 1 as seen obliquely from below. FIG. 4 is a side view illustrating the schematic configuration of the cleaning machine 1 according to the embodiment of the present invention. FIG. 4 is a view of the cleaning machine 1 as seen from the right side.

As illustrated in FIG. 2 to FIG. 4, the cleaning machine 1 includes a travel unit 11, a cleaning unit 12, a propeller 13, and an annular body 14.

The travel unit 11 includes a travel unit main body 111 and four wheels 112. In detail, the four wheels 112 are a left front wheel 112a, a right front wheel 112b, a left rear wheel 112c, and a right rear wheel 112d. Each of the wheels 112 is arranged on a side of the travel unit main body 111 such that rotary power from the respective motor 1a, which is arranged in the travel unit main body 111, can be transmitted the respective wheel 112. In other words, the motors 1a arranged in the travel unit main body 111 include a motor for the left front wheel 112a, a motor for the right front wheel 112b, a motor for the left rear wheel 112c, and a motor for the right rear wheel 112d. Each of the wheels 112 is independently rotated by driving the respective motor 1a. Each of the motors 1a is connected to the power supply wire that is included in the electric wire bundle 7 (see FIG. 1) described above.

When the motors 1a rotate in the same direction at the same rotational speed, the travel unit 11 moves straight forward in the front-rear direction. That is, the travel unit 11 travels straight forward in the front-rear direction. Whether the travel unit 11 travels forward or backward depends on rotational directions of the motors 1a. For example, in the case where the rotational speeds of the motors for the right wheels 112b, 112d are increased to be higher than the rotational speeds of the motors for the left wheels 112a, 112c while the travel unit 11 travels forward, the travel unit 11 turns to the left. On the contrary, in the case where the rotational speeds of the motors for the left wheels 112a, 112c are increased to be higher than the rotational speeds of the motors for the right wheels 112b, 112d, the travel unit 11 turns to the right.

Also, when the travel unit 11 travels backward, an advancing direction thereof can be changed similarly. In addition, when the motors for the left wheels 112a, 112c rotate in an opposite direction from the motors for the right wheels 112b, 112d, the travel unit 11 can turn (make an ultra-pivotal turn). The number of the motors that are accommodated in the travel unit main body 111 is not limited to four and may be two, for example. For example, it may be configured to include two motors that are the motor for the left front wheel 112a and the motor for the right front wheel 112b. In such a configuration, the left front wheel 112a and the left rear wheel 112c may be coupled to each other by a belt mechanism or a chain mechanism, and the right front wheel 112b and the right rear wheel 112d may similarly be coupled to each other by the belt mechanism or the chain mechanism.

The cleaning unit 12 is arranged under the travel unit 11 and cleans the cleaning target. In detail, the cleaning unit 12 jets the high-pressure water, which is supplied from the high-pressure water pump 4 via the hose 8, toward the aquaculture net as the cleaning target, and cleans the aquaculture net by a jet flow generated by the jet.

The cleaning unit 12 has a disc-shaped rotary body 121. The rotary body 121 is attached to a lower end portion of a rotary shaft 15 that extends in the up-down direction, and rotates with the rotary shaft 15. The rotary shaft 15 is rotatably supported by the travel unit main body 111. In detail, the rotary shaft 15 is rotatably supported by a rotary joint (not illustrated) that is arranged in the travel unit main body 111. The high-pressure water that has been supplied from the high-pressure water pump 4 to the rotary joint flows through the rotary shaft 15 and the rotary body 121 and is then delivered to a cleaning nozzle 122 that is arranged on a bottom surface of the rotary body 121. In the present embodiment, the two cleaning nozzles 122 are provided. However, the number of the cleaning nozzles 122 may be changed appropriately.

The cleaning nozzle 122 is arranged to be inclined downward at a predetermined angle. During cleaning, the jet of the high-pressure water from the cleaning nozzle 122 is directed toward a surface of the aquaculture net. When the high-pressure water is jetted from the cleaning nozzle 122, the rotary body 121 rotates with the rotary shaft 15 by a jet reaction force that is generated in conjunction with the jet of this high-pressure water. The cleaning unit 12 jets the high-pressure water to the surface of the aquaculture net while rotating about the rotary shaft 15. In this way, the cleaning unit 12 can extensively remove seaweeds, algae, shellfishes, and the like attached to the aquaculture net.

The propeller 13 is arranged above the travel unit 11. The propeller 13 is attached to an upper end portion of the rotary shaft 15. The propeller 13 rotates with the rotary shaft 15. When the high-pressure water is jetted from the cleaning nozzle 122, and the rotary shaft 15 rotates with the rotary body 121 by the jet reaction force, the propeller 13 also rotates. The propeller 13 generates a thrust that presses the travel unit 11 against the cleaning target by rotation.

The annular body 14 surrounds the propeller 13. In the plan view in the up-down direction, the annular body 14 has an annular shape with a large-diameter opening 141 at a center. The propeller 13 is arranged in the opening 141 that is provided to the annular body 14. In detail, the annular body 14 is coupled to the travel unit 11 by a coupling body 16 that is arranged between the travel unit main body 111 and the annular body 14 in the up-down direction. The coupling body 16 is a column that extends in the up-down direction. In the present embodiment, the two coupling bodies 16 are provided, and are arranged at the center of the travel unit main body 111 in the front-rear direction. One of the two coupling bodies 16 is arranged in a left end portion of the travel unit main body 111, and the other thereof is arranged in a right end portion of the travel unit main body 111.

The annular body 14 has a function as a float. With provision of the annular body 14 that functions as the float, the cleaning machine 1 floats when being put in water. In the present embodiment, when being put in water, the cleaning machine 1 takes a posture with the annular body 14 on the upper side and the travel unit 11 on the lower side, and floats with an upper surface of the annular body 14 being at substantially the same level as a water surface. The propeller 13 is present under water in the floating state of the cleaning machine 1.

In the present embodiment, the camera 1b is attached to each of a front end portion and a rear end portion of the annular body 14. The cameras 1b include a front camera 1bF that captures an image in front of the cleaning machine 1 and a rear camera 1bR that captures an image behind the cleaning machine 1. The number and the arrangement of the cameras 1b may be changed appropriately.

The travel unit 11 and the annular body 14 separate from each other in the up-down direction, and an introduction space 10 is provided between the travel unit 11 and the annular body 14. The introduction space 10 functions as a water introduction path. When the propeller 13 rotates, water is introduced from the introduction space 10 toward the propeller 13, and a water flow spews from the opening 141. The water flow that is generated by the rotation of the propeller 13 generates the thrust on the cleaning machine 1. In this way, each of the wheels 112 abuts the aquaculture net at a predetermined pressure, and such a state is maintained.

### 3. Overview of Cleaning Using Underwater Cleaning Apparatus

When the aquaculture net is cleaned by using the underwater cleaning apparatus 100, a crane on land or shipboard is used to put the cleaning machine 1 into an aquaculture space (under water) that is surrounded by the aquaculture net. At a point of being put into water, the cleaning machine 1 floats. Thereafter, the high-pressure water pump 4 is driven to supply the high-pressure water to the cleaning unit 12 of the cleaning machine 1 via the hose 8. Consequently, the cleaning unit 12 rotates with the propeller 13. With the thrust generated by the rotation of the propeller 13, the cleaning machine 1 is pressed against the aquaculture net. In the state where the cleaning machine 1 is pressed against the aquaculture net, when the wheels 112 rotate by driving the motors 1a, the cleaning machine 1 travels along the surface of the aquaculture net. During the travel, the cleaning unit 12 jets the high-pressure water from the cleaning nozzle 122 while rotating. Thus, the aquaculture net can be cleaned extensively.

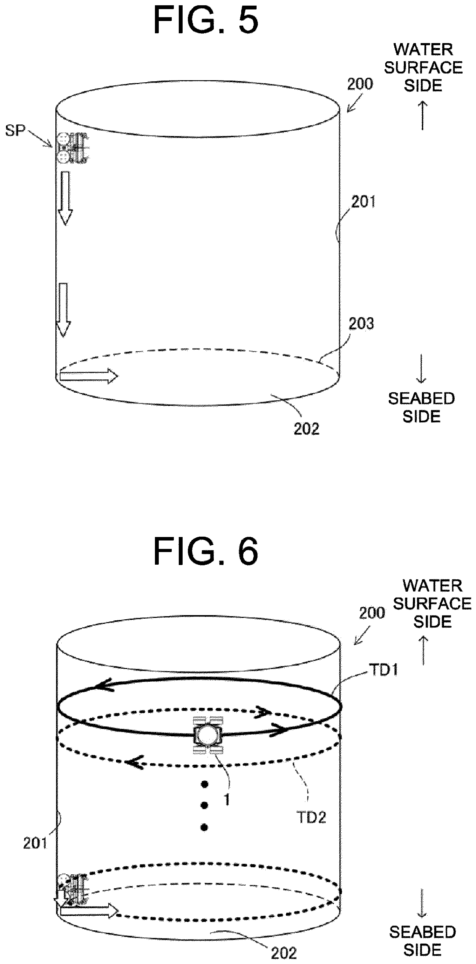

FIG. 5 is a view for explaining an example of cleaning an aquaculture net 200 by using the underwater cleaning apparatus 100 according to the embodiment of the present invention. When cleaning the aquaculture net 200, the cleaning machine 1 moves to a start position SP by manual travel using the manipulation unit 5. In the example illustrated in FIG. 5, the start position SP is set on a side surface 201 of the aquaculture net 200. The cleaning machine 1 starts cleaning (automatic cleaning) from the start position SP by automatic travel. A portion of the aquaculture net in which the cleaning machine 1 travels is cleaned by operation of the cleaning unit 12.

In the example illustrated in FIG. 5, the cleaning machine 1 starts moving straight forward (moving forward) toward the seabed along the side surface 201 under control by the controller 2. The cleaning machine 1 moves forward along the side surface 201, reaches a bottom surface 202, keeps moving forward, and starts moving forward along the bottom surface 202. Thereafter, the cleaning machine 1 moves while cleaning the bottom surface 202 according to movement control for bottom surface cleaning by the controller 2. Details on the movement control for the cleaning machine 1 on the bottom surface 202 will be described below.

In the example illustrated in FIG. 5, the automatic cleaning start position SP is set on the side surface 201. However, this is merely an example. The start position may be set on the bottom surface 202. In addition, the cleaning machine 1 may be configured to automatically move to the water surface (sea surface) side or to be manually returned to the water surface side when cleaning of the bottom surface 202 is finished.

FIG. 6 is a view for explaining another example of cleaning the aquaculture net 200 by using the underwater cleaning apparatus 100 according to the embodiment of the present invention. In the example illustrated in FIG. 6, the cleaning machine 1 automatically cleans the side surface 201 under the movement control by the controller 2, and thereafter automatically cleans the bottom surface 202. Also, in the example illustrated in FIG. 6, the cleaning machine 1 moves to the start position set on the side surface 201 by the manual travel using the manipulation unit 5. The start position is set at a position near the water surface of the aquaculture net 200.

During the automatic cleaning of the side surface 201, the cleaning machine 1 moves forward or backward while keeping a constant water depth (a target water depth) from the start position. The cleaning machine 1 circles once along the side surface 201 (an inner circumferential surface) of the aquaculture net 200 while keeping the constant water depth. After circling once along the inner circumferential surface of the aquaculture net 200, the cleaning machine 1 deepens the position of the own machine to the target water depth that is deeper than the current water depth.

In the example illustrated in FIG. 6, to change from a target water depth TD1 indicated by a bold line to a target water depth TD2 indicated by a broken line corresponds to an example of changing the target water depth. The cleaning machine 1 circles once along the inner circumferential surface of the aquaculture net 200 while keeping the target water depth that has been changed. At this time, the cleaning machine 1 travels in an opposite direction from a direction at the last target water depth. For example, in the case where the last travel direction is the counterclockwise direction, the current travel direction is the clockwise direction. When the advancing direction is reversed just as described, it is possible to suppress twisting of the hose 8, which extends from the cleaning machine 1, or the like.

The cleaning machine 1 alternately repeats circling while keeping the target water depth and changing the target water depth. This allows the cleaning machine 1 to clean the side surface 201 of the aquaculture net 200 from an end portion on the sea surface side to an end portion on the seabed side. The end of cleaning of the side surface 201 may be determined on the basis of the information acquired from the water depth sensor 1c or the camera 1b, for example.

When cleaning of the side surface 201 of the aquaculture net 200 is finished, the controller 2 uses the information from the posture sensor 1d to change the posture of the cleaning machine 1 to such a posture that the cleaning machine 1 can travel forward to the seabed side, for example. Thereafter, the controller 2 executes the movement control for the cleaning machine 1 by using the same method as that in the case of FIG. 5 described above, and causes the cleaning machine 1 to automatically clean the bottom surface 202. The details on the movement control for the cleaning machine 1 on the bottom surface 202 will be described below.

Also, in the example illustrated in FIG. 6, the cleaning machine 1 may be configured to automatically move to the water surface (the sea surface) side or to be manually returned to the water surface side when cleaning of the bottom surface 202 is finished. Alternatively, the cleaning machine 1 may be configured to automatically clean the side surface 201 after automatically cleaning the bottom surface 202.

### 4. Automatic Cleaning of Bottom Surface

Hereinafter, a detailed description will be made on a method for automatically cleaning the bottom surface 202 of the aquaculture net 200 by using the underwater cleaning apparatus 100.

### 4-1. First Embodiment

First, a description will be made on the method for automatically cleaning the bottom surface 202 according to a first embodiment of the present invention.

### 4-1-1. Function of Controller

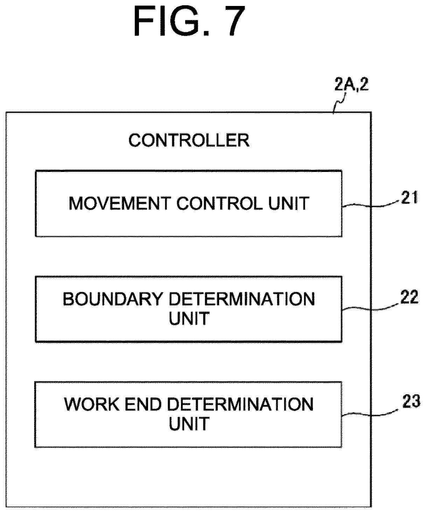

FIG. 7 is a block diagram illustrating functions of a controller 2A that executes the method for automatically cleaning the bottom surface 202 according to the first embodiment. The controller 2A is a specific example of the controller 2 illustrated in FIG. 1. As illustrated in FIG. 7, the controller 2A includes, as functions thereof, a movement control unit 21, a boundary determination unit 22, and a work end determination unit 23. In the present embodiment, the functions of the controller 2A are implemented when an arithmetic circuit such as a CPU executes arithmetic processing according to the program stored in the storage 3 (see FIG. 1).

Each of the functional units 21 to 23 may collectively be implemented by the single program, but may be implemented by plural programs such that each of the functional units is implemented by the respective program, for example. Alternatively, each of the functional units 21 to 23 may be implemented by a respective arithmetic unit.

As described above, each of the functional units 21 to 23 may be implemented by causing the processor such as the CPU to execute the program, that is, by software, but may be implemented by another method. At least one of the functional units 21 to 23 may be implemented by using an application-specific integrated circuit (ASIC), a field-programmable gate array (FPGA), or the like, for example. That is, each of the functional units 21 to 23 may be implemented by hardware using a dedicated IC or the like. Further alternatively, each of the functional units 21 to 23 may be implemented by using the software and the hardware in combination. In addition, each of the functional units 21 to 23 is a conceptual component. The function implemented by the single component may be distributed to the plural components. Furthermore, the functions of the plural components may be integrated into the single component.

The movement control unit 21 executes the movement control for the cleaning machine 1 according to the operation mode that is selected by using the manipulation unit 5. When the operation mode is the manual mode, the movement control unit 21 executes the movement control for the cleaning machine 1 in response to the command issued by the manipulator using the manipulation unit 5. Meanwhile, when the operation mode is the automatic mode, the movement control unit 21 executes the movement control on the basis of the information that is acquired from the sensor such as the water depth sensor 1c or the posture sensor 1d. In the case where the operation mode is the automatic mode, the movement control unit 21 executes the movement control by using the information that is acquired from the camera 1b in addition to the sensor information. In detail, the movement control is realized by drive control for four of the front, rear, left, and right motors 1a.

The boundary determination unit 22 determines a boundary between the bottom surface 202 and the side surface 201 of the aquaculture net 200. The boundary is determined on the basis of a pitch angle of the cleaning machine 1 that is acquired from the posture sensor 1d. That is, the controller 2A determines the boundary between the bottom surface 202 and the side surface 201 of the cleaning target 200 on the basis of the pitch angle of the cleaning machine 1 that is acquired from the posture sensor 1d. Here, the pitch angle is a rotation angle of the cleaning machine 1 about a horizontal axis.

In the present embodiment, it is possible to detect the boundary between the bottom surface 202 and the side surface 201 of the aquaculture net 200 only by using an inclination change (a change in the pitch angle) of the cleaning machine 1 as an index. That is, even when an accurate distance from the cleaning machine 1 to the side surface 201 cannot be measured, the bottom surface 202 can efficiently be cleaned by detecting the boundary between the bottom surface 202 and the side surface 201. With the configuration in the present embodiment, even when the aquaculture net 200 is made of the synthetic fiber and thus the shape thereof is easily changed, the boundary between the bottom surface 202 and the side surface 201 can be detected appropriately. In addition, in the configuration that the aquaculture net 200 is cleaned by jetting the high-pressure water like the cleaning machine 1 in the present embodiment, air bubbles are formed during cleaning work. For example, in the case where a distance measuring sensor using a sound wave is used, the air bubbles become noise, which prevents accurate detection of the boundary between the bottom surface 202 and the side surface 201. Regarding this point, according to the present embodiment, the boundary between the bottom surface 202 and the side surface 201 can be detected accurately regardless of formation of the air bubbles.

In detail, the boundary determination unit 22 detects the boundary between the bottom surface 202 and the side surface 201 when the pitch angle falls out of a predetermined range. The predetermined range is from -45° to +45°, for example. When the boundary determination unit 22 detects the boundary, the movement control unit 21 changes a direction of movement of the cleaning machine 1. That is, when the pitch angle falls out of the predetermined range, the controller 2A detects the boundary and changes the direction of movement of the cleaning machine 1. By changing the direction of movement of the cleaning machine 1 according to the detection of the boundary, the bottom surface 202 can be cleaned efficiently. The change of the direction of movement may include switching between the forward movement and the backward movement and turning. The change of the direction of movement will be described in detail below.

The work end determination unit 23 determines the end of the cleaning work on the bottom surface 202 of the aquaculture net 200 by the cleaning machine 1. In the present embodiment, the work end determination unit 23 determines the end of the cleaning work on the bottom surface 202 on the basis of a roll angle of the cleaning machine 1 that is acquired from the posture sensor 1d. Here, the roll angle is a rotation angle of the cleaning machine 1 about an axis in the front-rear direction. The end determination of the cleaning work on the bottom surface 202 will be described in detail below.

### 4-1-2. Bottom Surface Cleaning Method

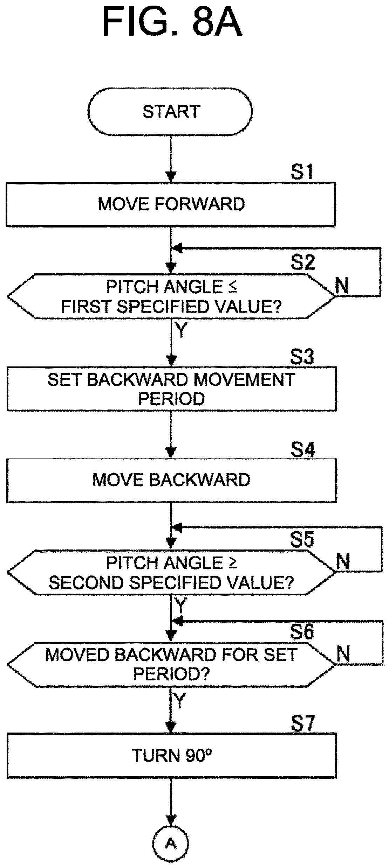

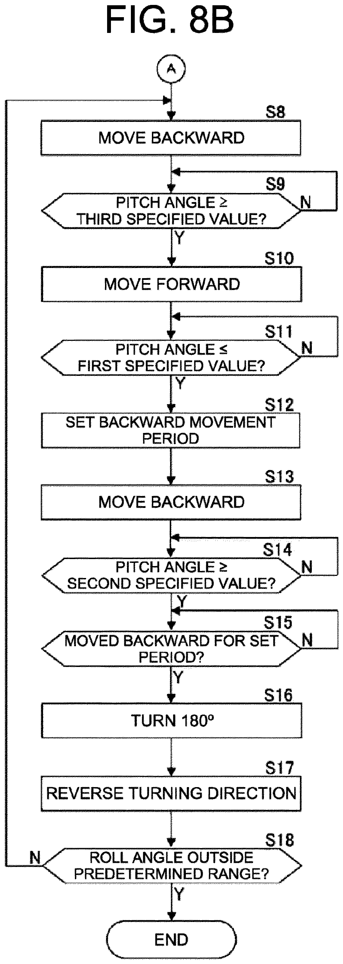

FIGS. 8A and 8B are flowcharts illustrating a flow of the automatic cleaning processing on the bottom surface 202 that is executed by the controller 2A in the first embodiment. FIG. 8A illustrates a first part of the processing. FIG. 8B illustrates a latter part of the processing.

In the present embodiment, the controller 2A is provided to be able to start the movement control for the cleaning machine 1 (the movement control for the automatic cleaning) from the side surface 201. In the example illustrated in FIGS. 8A and 8B, the start position of the movement control (the automatic cleaning start position) for the cleaning machine 1 is the side surface 201. At the automatic cleaning start position, the cleaning machine 1 is arranged on the side surface 201 such that a front portion thereof faces downward (the seabed). Since the automatic movement control is started from the side surface 201, the need for manually moving the cleaning machine 1 to the bottom surface 202 can be eliminated, and a workload on the manipulator can thus be reduced. In addition, when moving along the side surface 201, the cleaning machine 1 only needs to move straight forward in a direction of gravity. Thus, it is possible to reduce a burden of alignment at the start of the travel. Here, the automatic cleaning start position may be the bottom surface 202.

In step S1, the controller 2A controls the motors 1a to cause the cleaning machine 1 to move forward. The forward movement is straight forward movement (straight forward travel). In the present embodiment, during the straight forward movement, position control for the cleaning machine 1 is not executed, and only posture control using a posture angle that is acquired from the posture sensor 1d is executed. The posture angles acquired from the posture sensor 1d include the pitch angle, the roll angle, and a yaw angle. The yaw angle is a rotation angle of the cleaning machine 1 about an axis in the up-down direction. For example, the controller 2A controls speeds of the left and right wheels 112 such that the yaw angle becomes 0°.

In the present embodiment, it is configured to make the straight forward movement only by using the posture control. However, this is merely an example. For example, the controller 2A may estimate the position on the bottom surface 202 by using the moved distance in the front-rear direction and the direction of movement, and may execute the position control during the straight forward movement. The moved distance is acquired by using an encoder that measures a rotational speed of the wheel 112, and the direction of movement is acquired from the posture sensor 1d.

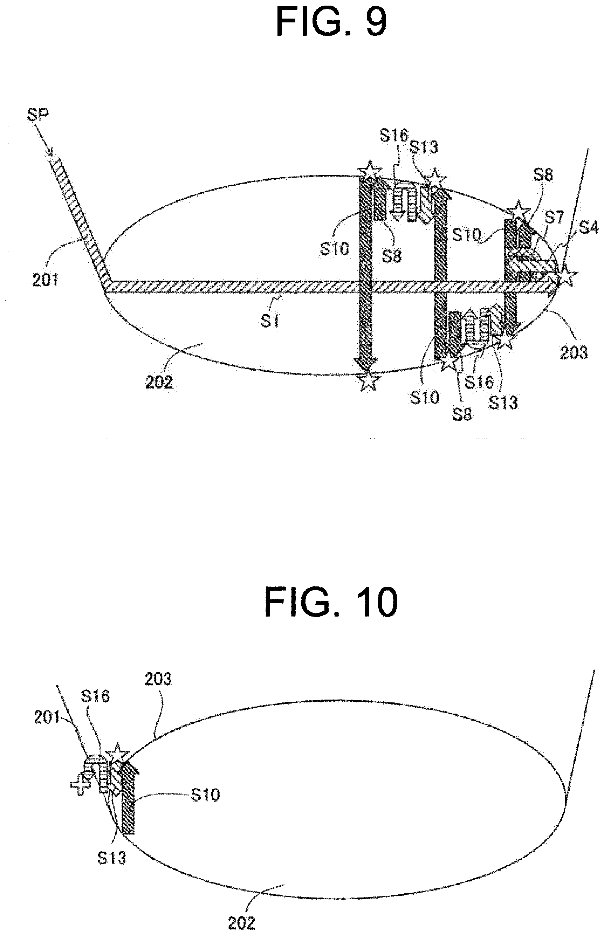

FIG. 9 is a schematic view for explaining the movement control for the cleaning machine 1 at the time of automatically cleaning the bottom surface 202 of the aquaculture net 200. In FIG. 9, each arrow indicates a moving state including the direction of movement of the cleaning machine 1. Each of the arrows is denoted by a reference sign that corresponds to a reference sign (such as S1) denoting the respective step in FIG. 8A or 8B. Each star mark in FIG. 9 indicates that a boundary 203 between the bottom surface 202 and the side surface 201 is detected on the basis of the pitch angle. Hereinafter, a description will be made on the automatic cleaning processing in FIGS. 8A and 8B with appropriate reference to FIG. 9. As illustrated in FIG. 9, the cleaning machine 1 that has started moving forward from the start position SP provided on the side surface 201 moves from the side surface 201 to the bottom surface 202 and then moves across the bottom surface 202. After the cleaning machine 1 starts traveling forward, the processing proceeds to next step S2.

In step S2, the controller 2A determines whether the pitch angle is equal to or smaller than a first specified value. The first specified value is set such that the boundary 203 can be detected when the cleaning machine 1 moves forward. In the present embodiment, the pitch angle is set in advance such that the pitch angle becomes 0° when the cleaning machine 1 takes a horizontal posture. In addition, the pitch angle at the time when the cleaning machine 1 is inclined such that the front portion thereof is located higher than a rear portion thereof is set to be smaller than 0° (have a negative value). Furthermore, the pitch angle at the time when the cleaning machine 1 is inclined such that the rear portion thereof is located higher than the front portion thereof is set to be larger than 0° (have a positive value). However, such settings are merely examples, and the method for setting the pitch angle may be changed appropriately.

The pitch angle at the start position SP (see FIG. 9) is approximately +90°, for example. The first specified value is -45°, for example. The pitch angle of the cleaning machine 1 is approximately 0° when the cleaning machine 1 starts moving forward from the start position SP and moves from the side surface 201 to the bottom surface 202. At this point, since the pitch angle is larger than -45°, the boundary 203 is not detected. As illustrated in FIG. 9, the cleaning machine 1 keeps moving forward on the bottom surface 202 and reaches the boundary 203. In the case where the cleaning machine 1 keeps moving forward after reaching the boundary 203, the cleaning machine 1 starts running on the side surface 201. In the case where the cleaning machine 1 further keeps moving forward after the start of running-on, the pitch angle becomes equal to or smaller than -45°. As a result, the controller 2A detects the boundary 203.

That is, in the present embodiment, the controller 2A causes the straight forward movement of the cleaning machine 1 until detecting the boundary 203. In this way, the bottom surface 202 can be cleaned to an outer edge thereof. In addition, the controller 2A detects the first boundary 203 after the cleaning machine 1 starts first straight forward movement that is the first straight forward movement on the bottom surface 202. With such a configuration, even in the case where the automatic cleaning start position SP is set on the side surface 201, it is possible to detect the boundary 203, which is required for cleaning of the bottom surface 202, without executing complicated processing. If the pitch angle becomes equal to or smaller than the first specified value (Yes in step S2), the boundary 203 is detected, and the processing proceeds to next step S3. On the other hand, if the pitch angle is larger than the first specified value (No in step S2), the processing in step S2 is repeatedly executed while the cleaning machine 1 keeps moving forward.

Under water, the bottom surface 202 has a wavy shape due to an influence of a tidal current or the like. Thus, the pitch angle of the cleaning machine 1 may momentarily become equal to or smaller than the first specified value even during the movement on the bottom surface 202. In consideration of this point, it may be configured to detect the boundary 203 in the case where a state where the pitch angle is equal to or smaller than the first specified value continues for a predetermined period (for example, several seconds or the like).

In the present embodiment, it is configured to detect the boundary 203 only on the basis of the pitch angle. However, this is merely an example. As described above, the boundary 203 may be detected on the basis of the pitch angle and the period. Alternatively, it may be configured to detect the boundary 203 with reference to the moved distance of the cleaning machine 1 on the bottom surface 202 in addition to the pitch angle, for example. In such a case, an amount of movement of the cleaning machine 1 may be acquired by using the encoder that measures the rotational speed of the wheel 112, for example. Further alternatively, the position of the boundary 203 may be detected by using shape information and dimensional information of the aquaculture net 200 that are acquired in advance. Depending on a case, instead of using the pitch angle 203, the boundary 203 may be detected on the basis of the shape information and the dimensional information of the aquaculture net 200 and information on the distance of movement of the cleaning machine 1 on the bottom surface 202.

In step S3, the controller 2A sets a backward movement period for the cleaning machine 1. That is, once the boundary 203 is detected, the cleaning machine 1 stops moving forward and starts moving backward. The backward movement is straight backward movement (straight backward travel). The setting of the period in step S3 is preparation processing for the backward movement. Details on a reason for the backward movement and the setting of the backward movement period will be described below. After the backward movement period is set, the processing proceeds to next step S4.

In step S4, the controller 2A causes the cleaning machine 1 to move backward by controlling the motors 1A. By the backward movement, the state of the cleaning machine 1 can be changed from the state of running on the side surface 201 to a state of not running on the side surface 201. After the cleaning machine 1 starts moving backward, the processing proceeds to next step S5.

In step S5, the controller 2A determines whether the pitch angle is equal to or larger than a second specified value. The second specified value is set such that the elimination of running on the side surface 201 by the cleaning machine 1 can be confirmed. The second specified value may be -5°, for example. If the pitch angle is equal to or larger than the second specified value (Yes in step S5), the processing proceeds to next step S6. On the other hand, if the pitch angle is smaller than the second specified value (No in step S5), the processing in step S5 is repeatedly executed while the cleaning machine 1 keeps moving backward.

In step S6, the controller 2A determines whether the cleaning machine 1 has moved backward for a preset period (set in step S3). The processing for causing the cleaning machine 1 to move backward for the set period is provided to prevent the cleaning machine 1 from running over the boundary 203 during the turn, which will be made later. For this reason, the period set in step S3 is set as follows. The cleaning machine 1 moves backward at least for a distance that is acquired by adding a turning radius to half a machine body length (a length in the front-rear direction) after the pitch angle of the cleaning machine 1 becomes equal to or smaller than the second specified value, for example. The setting of the period may be determined by an experiment, a simulation, or the like, for example. If it is determined that the cleaning machine 1 has moved backward for the set period (Yes in step S6), the processing proceeds to next step S7. On the other hand, if it is determined that the cleaning machine 1 has not moved backward for the set period (No in step S6), the processing in step S6 is repeatedly executed while the cleaning machine 1 keeps moving backward.

As it is understood from the description so far, the backward movement processing executed in step S4 is the processing to eliminate the state of the cleaning machine 1 running on the side surface 201. Further in detail, the backward movement processing executed in step S4 is the processing to secure a turning space on the bottom surface 202, in addition to the elimination of running on the side surface 201. Hereinafter, the backward movement performed for any of such purposes may be described as first backward movement.

In step S7, the controller 2A causes the cleaning machine 1 to turn 90° by controlling the motors 1a. In the present embodiment, the cleaning machine 1 turns 90° clockwise according to the setting, which is made in advance (also see FIG. 9). The cleaning machine 1 may turn 90° counterclockwise. In addition, the cleaning machine 1 preferably makes the ultra-pivotal turn. When the cleaning machine 1 makes the ultra-pivotal turn as the turn, displacement associated with turning can be minimized. After the cleaning machine 1 turns 90°, the processing proceeds to next step S8.

As it has been described so far, in the present embodiment, when the controller 2A detects the boundary 203 on the basis of the first straight forward movement, which is the first straight forward movement by the cleaning machine 1 on the bottom surface 202, the controller 2A causes the cleaning machine 1 to turn 90°. With such a configuration, a cleaning route of the cleaning machine 1 can be set as follows. After the cleaning machine 1 moves across the bottom surface 202 in the right-left direction once, the cleaning machine 1 repeatedly moves across the bottom surface 202 in the front-rear direction, and then eventually returns to a crossing start point. In such a case, a cleaning end position on the bottom surface 202 is located at or near the crossing start point. Thus, it is possible to reduce a maneuvering load on the manipulator. The cleaning route after the 90° turn will be described in detail below.

In the present embodiment, the controller 2A causes the cleaning machine 1 to make the first backward movement prior to the turn that is made in association with the detection of the boundary 203. In detail, the controller 2A causes the cleaning machine 1 to make the first backward movement before making the 90° turn upon detection of the boundary 203. By making the first backward movement, the cleaning machine 1 can avoid making a turn on the side surface 201 (the inclined surface). When making the turn on the inclined surface, there is a high possibility that the cleaning machine 1 slips down and causes displacement. With the configuration in the present embodiment, it is possible to suppress such displacement during the turn. Thus, it is possible to suppress occurrence of insufficient cleaning and unnecessary repeated cleaning of the same area.

In step S8, the controller 2A causes the cleaning machine 1 to move backward by controlling the motors 1a (also see FIG. 9). The backward movement is made to reduce the occurrence of insufficient cleaning near the boundary 203. Such backward movement differs from the first backward movement that is made to eliminate running on the side surface 201 described above. Hereinafter, the backward movement that is made to reduce the occurrence of insufficient cleaning may be described as second backward movement. As it is understood from the description so far, in the present embodiment, the controller 2A causes the cleaning machine 1 to make the second backward movement after the cleaning machine 1 turns. In detail, the controller 2A causes the cleaning machine 1 to make the second backward movement after the 90° turn. After the cleaning machine 1 starts the second backward movement, the processing proceeds to next step S9.

In step S9, the controller 2A determines whether the pitch angle is equal to or larger than a third specified value. The third specified value is set such that the boundary 203 can be detected when the cleaning machine 1 moves backward. The third specified value may be +45°, for example. If the pitch angle is equal to or larger than the third specified value (Yes in step S9), it can be determined that generation of an uncleaned region can be suppressed due to a fact that the cleaning machine 1 has made the backward movement and reached the boundary 203. Thus, the processing proceeds to next step S10. On the other hand, if the pitch angle is smaller than the third specified value (No in step S9), it can be determined that the cleaning machine 1 has not reached the boundary 203 by the backward movement. Thus, the processing in step S9 is repeatedly executed while the cleaning machine 1 keeps moving backward.

In step S10, the controller 2A causes the cleaning machine 1 to move forward by controlling the motors 1a (also see FIG. 9). The forward movement direction at this time is rotated 90° from the forward movement direction in step S1. In other words, the controller 2A causes the cleaning machine 1 to make second straight forward movement that is the straight forward movement in a perpendicular direction to the first straight forward movement. After the cleaning machine 1 starts moving forward, the processing proceeds to next step S11.

In step S11, the controller 2A determines whether the pitch angle is equal to or smaller than the first specified value. This processing is processing to detect the boundary during the forward movement of the cleaning machine 1 and is the same as the processing in step S2 described above. For this reason, a detailed description thereon will not be made. If the pitch angle becomes equal to or smaller than the first specified value (Yes in step S11), the boundary 203 is detected, and the processing proceeds to next step S12. On the other hand, if the pitch angle is larger than the first specified value (No in step S11), the processing in step S11 is repeatedly executed while the cleaning machine 1 keeps moving forward.

In step S12, the controller 2A sets the backward movement period for the cleaning machine 1. This processing to set the backward movement period is processing to set the backward movement period during the first backward movement and is the same as the processing in step S3 described above. For this reason, a detailed description thereon will not be made. After the backward movement period is set, the processing proceeds to next step S13.

In step S13, the controller 2A causes the cleaning machine 1 to move backward by controlling the motors 1a (also see FIG. 9). Such backward movement is the first backward movement and is the same processing as that in step S4 described above. For this reason, a detailed description thereon will not be made. After the cleaning machine 1 starts moving backward, the processing proceeds to next step S14.

In step S14, the controller 2A determines whether the pitch angle is equal to or larger than the second specified value. This processing is processing to confirm the elimination of running on the side surface 201 by the cleaning machine 1 and is the same as the processing in step S2 described above. For this reason, a detailed description thereon will not be made. If the pitch angle is equal to or larger than the second specified value (Yes in step S14), the processing proceeds to next step S15. On the other hand, if the pitch angle is smaller than the second specified value (No in step S14), the processing in step S14 is repeatedly executed while the cleaning machine 1 keeps moving backward.

In step S15, the controller 2A determines whether the cleaning machine 1 has moved backward for the preset period (set in step S12). The processing for causing the cleaning machine 1 to move backward for the set period is provided to prevent the cleaning machine 1 from running over the boundary 203 during a 180° turn, which will be made later. This processing is the same as that in step S6 described above. For this reason, a detailed description thereon will not be made. If it is determined that the cleaning machine 1 has moved backward for the set period (Yes in step S15), the processing proceeds to next step S16. On the other hand, if it is determined that the cleaning machine 1 has not moved backward for the set period (No in step S15), the processing in step S15 is repeatedly executed while the cleaning machine 1 keeps moving backward.

In step S16, the controller 2A causes the cleaning machine 1 to turn 180° by controlling the motors 1a. In the present embodiment, the cleaning machine 1 turns 180° in a set direction (also see FIG. 9). In detail, the direction of the 180° turn is the clockwise direction by default. By setting the direction of the first 180° turn to the clockwise direction, a cleaning position can be shifted to an uncleaned side with the last route of the second straight forward movement being a reference. In addition, the cleaning machine 1 preferably makes the ultra-pivotal turn. When the cleaning machine 1 makes the ultra-pivotal turn as the turn, it is possible to suppress an excessive increase in the displacement associated with turning and thus to suppress the occurrence of insufficient cleaning. After the cleaning machine 1 turns 180°, the processing proceeds to next step S17.

In step S17, the controller 2A sets the direction of the 180° turn to a reverse direction from the current turning direction. In the case where the turning direction in step S16 is the clockwise direction, the setting of the turning direction is changed from the clockwise direction to the counterclockwise direction. In the case where the turning direction in step S16 is the counterclockwise direction, the setting of the turning direction is changed from the counterclockwise direction to the clockwise direction. After the set turning direction is reversed, the processing proceeds to next step S18.

In step S18, the controller 2A determines whether the roll angle falls out of a predetermined range. The processing in step S18 is provided to determine whether cleaning of the entire bottom surface is finished. More specifically, the controller 2A determines the end of the cleaning work on the bottom surface 202 on the basis of the roll angle of the cleaning machine 1, which is acquired from the posture sensor 1d, after the 180° turn. In the present embodiment, there is no need to check the current position of the cleaning machine 1 with respect to the aquaculture net 200 on a map that is prepared in advance. Thus, it is possible to simplify the end determination processing of the cleaning work. The above-described predetermined range that is used as a determination criterion will be described in detail below.

The roll angle is set in advance to become 0° at the time when the cleaning machine 1 takes the horizontal posture, for example. In addition, the roll angle is set to become larger than 0° (have the positive value) at the time when the cleaning machine 1 is inclined such that a left portion thereof is located higher than the right portion thereof. Furthermore, the roll angle is set to become smaller than 0° (have the negative value) at the time when the cleaning machine 1 is inclined such that the right portion thereof is located higher than the left portion thereof. However, such settings are merely examples, and the method for setting the roll angle may be changed appropriately.

If the roll angle falls out of the predetermined range (Yes in step S18), the controller 2A determines that cleaning of the bottom surface 202 is finished, and thus terminates the processing flow illustrated in FIGS. 8A and 8B. The cleaning machine 1 may be configured to automatically move forward in the water surface direction (an opposite direction from the direction of gravity) after finishing cleaning of the bottom surface 202. At this time, it may be configured to set a beacon, a marker, or the like near the water surface, so as to make the cleaning machine 1 return to a specific position.

On the other hand, if the roll angle falls within the predetermined range (No in step S18), the controller 2A determines that cleaning of the bottom surface 202 has not been finished, and the processing returns to step S8. As a result, the processing in step S8 onward is repeated. More specifically, the controller 2A causes the cleaning machine 1 to make the second straight forward movement, which is the straight forward movement in the perpendicular direction to the first straight forward movement (the forward movement in step S1), several times while making the 180° turn associated with detection of the boundary 203. As illustrated in FIG. 9, the cleaning machine 1 repeats the second straight forward movement while making the 180° turn. In this way, from the position of the boundary 203, which is detected first by the first straight forward movement, the cleaning processing of the bottom surface 202 can progress in the opposite direction from the direction of the first straight forward movement.

FIG. 10 is a schematic view for explaining the end determination on the cleaning processing of the bottom surface 202. A star mark in FIG. 10 indicates that the boundary 203 between the bottom surface 202 and the side surface 201 is detected on the basis of the pitch angle.

In FIG. 10, the cleaning machine 1 reaches the vicinity of a position at which the cleaning processing of the entire bottom surface 202 is finished after repetition of the second straight forward movement described above. The cleaning machine 1 reaches the position, at which cleaning of the entire bottom surface 202 is finished, by making the forward movement corresponding to step S10 in FIG. 8B. When cleaning of the entire bottom surface 202 is finished, one side of the cleaning machine 1 is located near the side surface 201 (the boundary 203). Accordingly, in the case where the cleaning machine 1 moves forward (S10 in FIG. 8), then makes the first backward movement (S13 in FIG. 8B), and makes 180° turn (S16 in FIG. 8B), the cleaning machine 1 runs on the side surface 201. In FIG. 10, a cross mark indicates that the cleaning machine 1 has run on the side surface 201. When the cleaning machine 1 runs on the side surface 201 by making the 180° turn, the cleaning machine 1 is inclined in a rolling direction. The predetermined range in step S18 illustrated in FIG. 18B is set such that running of the cleaning machine 1 on the side surface 201 can be detected. The predetermined range is from -45° to +45°, for example.

As described above, in the automatic cleaning processing of the bottom surface 202 illustrated in FIGS. 8A and 8B, the processing to reverse the set turning direction in step S17 is executed. Accordingly, in the present embodiment, the turning direction of the 180° turn, which is made between two times of the second straight forward movement, is alternately reversed while the second straight forward movement is repeatedly made plural times. As described above, in the present embodiment, the electric wire bundle 7 and the hose 8 (hereinafter, may also be referred to as cables 7, 8) are connected to the cleaning machine 1. Twisting of the cables 7, 8 becomes a burden on the movement of the cleaning machine 1. However, by alternately reversing the turning direction of 180° turn as in the present embodiment, the cables 7, 8 are avoided from continuously rotating in the same direction. As a result, it is possible to suppress an excessive increase in the burden associated with twisting. More specifically, it is preferred to avoid the continuous rotation of the cables 7, 8 over 360°, and this can be realized with the configuration in the present embodiment.

In the present embodiment, the controller 2A causes the cleaning machine 1 to make the first backward movement before making the 180° turn in association with the detection of the boundary 203. By making the first backward movement, the cleaning machine 1 can avoid making the turn on the side surface 201 (the inclined surface). When making the turn on the inclined surface, there is the high possibility that the cleaning machine 1 slips down and causes the displacement. With the configuration in the present embodiment, it is possible to suppress the occurrence of such displacement during the turn. Thus, it is possible to suppress the occurrence of insufficient cleaning and unnecessary repeated cleaning.

In the present embodiment, the controller 2A causes the cleaning machine 1 to make the second backward movement after making the 180° turn. By making the second backward movement, it is possible to suppress the generation of the uncleaned region.

As it is understood from the description so far, the configuration in the present embodiment enables the appropriate automatic cleaning of the bottom surface of the aquaculture net 200 without using an expensive sensor despite a fact that it is difficult to detect the own position under water during such bottom surface cleaning.

### 4-2. Second Embodiment

Next, a description will be made on a method for automatically cleaning the bottom surface 202 according to a second embodiment of the present invention. In the description of the method for automatically cleaning the bottom surface 202 according to the second embodiment, contents that overlap the method for automatically cleaning the bottom surface 202 according to the first embodiment will not be described unless the description thereon is particularly necessary.

### 4-2-1. Functions of Controller

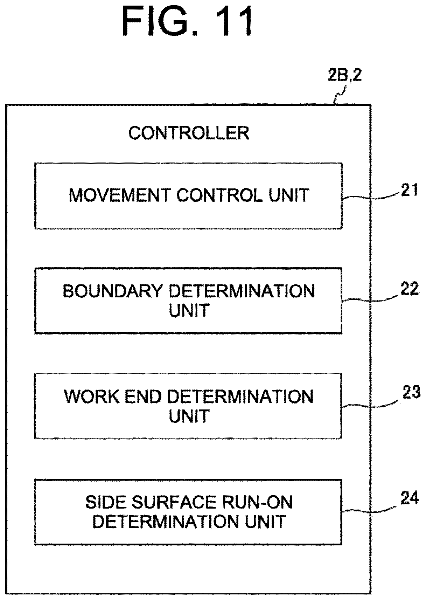

FIG. 11 is a block diagram illustrating functions of a controller 2B that executes the method for automatically cleaning the bottom surface 202 according to the second embodiment. The controller 2B is a specific example of the controller 2 illustrated in FIG. 1. As illustrated in FIG. 11, the controller 2B includes, as functions thereof, the movement control unit 21, the boundary determination unit 22, the work end determination unit 23, and a side surface run-on determination unit 24. Similar to the first embodiment, also in the present embodiment, the functions of the controller 2B are implemented when the arithmetic circuit such as the CPU executes the arithmetic processing according to the program stored in the storage 3 (see FIG. 1).

Since the movement control unit 21 and the boundary determination unit 22 are the same as those in the first embodiment, the description thereon will not be made.

The work end determination unit 23 determines the end of the cleaning work on the bottom surface 202 of the aquaculture net 200 by the cleaning machine 1. Although the second embodiment is the same as the first embodiment in regard to this point, the end determination method differs. The end determination method will be described in detail below.

The side surface run-on determination unit 24 determines whether the cleaning machine 1 has run on the side surface 201 after turning. In detail, the side surface run-on determination unit 24 determines whether the cleaning machine 1 has run on the side surface 201 after making the 180° turn. The method for determining whether the cleaning machine 1 has run on the side surface 201 after turning is the same as the method for determining the end of the work in the first embodiment. That is, whether the cleaning machine 1 has run on the side surface 201 is determined on the basis of the roll angle of the cleaning machine 1 that is acquired from the posture sensor 1d. In detail, running of the cleaning machine 1 on the side surface 201 is detected when the roll angle of the cleaning machine 1 falls out of the predetermined range. The predetermined range is from -45° to +45°, for example.

### 4-2-2. Bottom Surface Cleaning Method

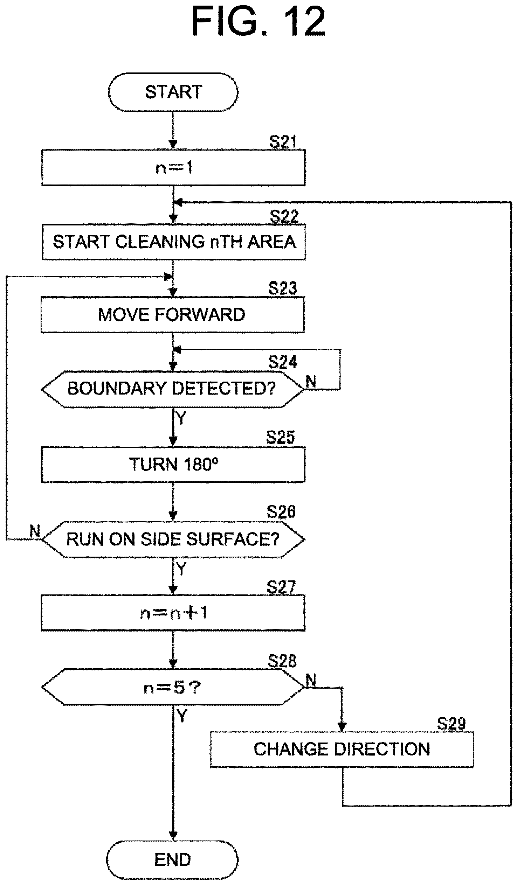

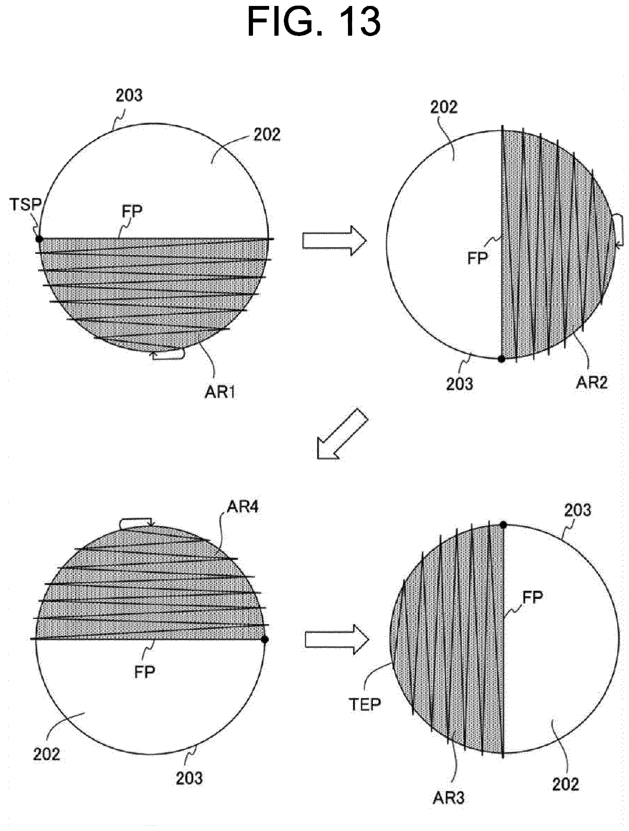

FIG. 12 is a flowchart exemplifying a flow of the automatic cleaning processing on the bottom surface 202 that is executed by the controller 2B in the second embodiment. FIG. 13 includes views schematically illustrating overview of the automatic cleaning processing on the bottom surface 202 according to the second embodiment. In FIG. 13, each black circle indicates a cleaning start point in respective one of areas AR1 to AR4. In addition, in FIG. 13, each straight line drawn on the bottom surface 202 indicates the cleaning route. As illustrated in FIG. 13, in the second embodiment, it is configured to sequentially clean the plural areas AR1 to AR4 that are assumed on the bottom surface 202. Hereinafter, a detailed description will be made on the automatic cleaning processing on the bottom surface 202 in the second embodiment with reference to FIGS. 12 and 13.

Here, the position of the cleaning machine 1 at the start of the automatic cleaning may be the same as that in the first embodiment, and may be on the side surface 201, for example. Hereinafter, it is assumed that the automatic cleaning control is started on the side surface 201.

In step S21, the controller 2B sets a variable n to 1. After the variable n is set to 1, the processing proceeds to next step S22.

In step S22, the controller 2B starts cleaning of an n-th area ARn (n: variable). After cleaning of the n-th area ARn is started, the processing proceeds to next step S23. Immediately after the start of the automatic cleaning, the variable n is 1, and the n-th area ARn is the first area AR1.

In step S23, the controller 2B causes the cleaning machine 1 to move forward by controlling the motors 1a. Upon the start of the forward travel, similar to the first embodiment, the cleaning machine 1 moves toward the seabed along the side surface 201, then moves from the side surface 201 to the bottom surface 202, and moves across the bottom surface 202. After the cleaning machine 1 starts moving forward, the processing proceeds to next step S24.

In step S24, the controller 2B determines whether the boundary 203 between the bottom surface 202 and the side surface 201 has been detected. The method for detecting the boundary 203 may be the same as that in the first embodiment. In detail, the boundary 203 may be detected by determining whether the pitch angle is equal to or smaller than the first specified value (for example, -45°). If the boundary 203 has been detected (Yes in step S24), the processing proceeds to next step S25. On the other hand, if the boundary 203 has not been detected (No in step S24), the monitoring processing in step S24 continues while the cleaning machine 1 keeps moving forward.

In step S25, the controller 2B causes the cleaning machine 1 to turn 180°. The 180° turn is the ultra-pivotal turn, for example. More specifically, the 180° turn is made such that cleaning of the n-th area ARn as the cleaning target progresses. In detail, the 180° turn is made such that cleaning progresses on one of the right side and left side in the direction of movement of the cleaning machine 1 with a first straight forward movement route FP for cleaning the n-th area ARn being a reference. In the present embodiment, as an example, the 180° turn is made such that cleaning progresses on the right side in the direction of movement. The first 180° turn is made in the clockwise direction. However, the turning direction of the 180° turn is reversed for each turn. That is, in the case where the turning direction of the first 180° turn is the clockwise direction, the turning direction of the second 180° turn is the counterclockwise direction, and the turning direction of the third 180° turn is the clockwise direction. After the cleaning machine 1 turns 180°, the processing proceeds to next step S26.

In detail, also in the present embodiment, similar to the first embodiment, the controller 2B causes the cleaning machine 1 to make the first backward movement before making the 180° turn. In this way, the cleaning machine 1 can turn on the bottom surface 202. In addition, similar to the first embodiment, the controller 2B causes the cleaning machine 1 to make the second backward movement after the 180° turn. In this way, it is possible to suppress the occurrence of insufficient cleaning.

In step S26, the controller 2B determines whether the cleaning machine 1 has run on the side surface 201 by making the 180° turn. As described above, whether the cleaning machine 1 has run on the side surface 201 is determined on the basis of the roll angle of the cleaning machine 1. The determination on running on the side surface 201 is made to determine whether cleaning of the n-th area ARn is finished. If running on the side surface 201 is detected, it is determined that cleaning of the n-th area ARn is finished. If running on the side surface 201 is detected (Yes in step S26), the processing proceeds to next step S27. On the other hand, if running on the side surface 201 is not detected (No in step S26), the processing returns to step S23, and the cleaning machine 1 starts moving forward after the 180° turn.

In step S27, the controller 2B executes addition processing to add 1 to the variable n. After the addition processing is executed, the processing proceeds to next step S28.

In step S28, the controller 2B determines whether the variable n is "5". If the variable n is "5" (Yes in step S28), the controller 2B determines that cleaning of all the assumed areas AR1 to AR4 is finished. Thus, the processing flow illustrated in FIG. 12 is terminated. Here, the variable n is added according to the detection of running on the side surface 201 by the cleaning machine 1. Thus, in the present embodiment, it can be said that the end of cleaning of the bottom surface 202 is determined on the basis of the number of running on the side surface 201 by the cleaning machine 1. If the variable n is not "5" (No in step S28), the controller 2B determines that cleaning of all the assumed areas AR1 to AR4 is not finished. Thus, the processing proceeds to step S29.

In step S29, the controller 2B changes the direction of the straight forward movement (the forward movement). In detail, the controller 2B changes the direction such that the straight forward movement is made in a perpendicular direction to the direction of the straight forward movement (the forward movement) in the (n-1)-th area ARn-1 that is the last cleaning region. After the direction is changed, the processing returns to step S22, and cleaning of the n-th area ARn is started.

As it is understood from the description related to FIGS. 12 and 13 so far, in the present embodiment, the controller 2B causes the cleaning machine 1 to repeatedly execute the series of the processing. The series of the processing includes the operation that is performed to clean the areas AR1 to AR4 set on the bottom surface 202. By repeating the series of the processing, the plural areas can be cleaned.

The series of the processing includes: the straight forward movement on the bottom surface 202; the 180° turn upon detection of the boundary 203 associated with the straight forward movement; the determination on running on the side surface 201 by the cleaning machine 1 after the 180° turn; and the change of the direction of the straight forward movement due to the determination of running on the side surface 201.

In the present embodiment, the controller 2B determines to finish the repetition of the series of the operation on the basis of the number of running on the side surface 201 by the cleaning machine 1. The number of the repetition of the series of the operation is preferably four. When the number of running on the side surface 201 by the cleaning machine 1 becomes equal to or higher than four, it is determined to finish the repetition of the series of the operation (that is, cleaning of the bottom surface 202). In the fourth repetition, in the series of the operation, the direction of the straight forward movement may be changed or may not be changed. By repeating the series of the operation four times, the four areas AR1 to AR4 can be cleaned.

With the configuration as in the present embodiment, the entire bottom surface 202 can be cleaned in two directions of a longitudinal direction and a horizontal direction. Since the bottom surface 202 can be cleaned twice, it is possible to reduce the occurrence of insufficient cleaning. In addition, since the bottom surface 202 can be cleaned in both of the longitudinal direction and the horizontal direction, it is possible to reduce the occurrence of insufficient cleaning even when the bottom surface 202 is bent. Furthermore, with the configuration as in the present embodiment, a cleaning start position TSP and a cleaning end position TEP (see FIG. 13) on the bottom surface 202 can be set at the same position or close to each other. This facilitates retrieval work of the cleaning machine 1.

In detail, as illustrated in FIG. 13, in the first time of the series of the operation, the first area AR1 is cleaned. The first area AR1 corresponds to one of two regions that are set by dividing the bottom surface 202 into two in the longitudinal direction. In the second time of the series of the operation, the second area AR2 is cleaned. The second area AR2 corresponds to one of two regions that are set by dividing the bottom surface 202 into two in a lateral direction. In the third time of the series of the operation, the third area AR3 is cleaned. The third area AR3 corresponds to the other of the two regions that are set by dividing the bottom surface 202 into two in the longitudinal direction. In the fourth time of the series of the operation, the fourth area AR4 is cleaned. The fourth area AR4 corresponds to the other of the two regions that are set by dividing the bottom surface 202 into two in the lateral direction.

### 4-2-3. Direction Change

Hereinafter, a detailed description will be made on the direction change in step S29 illustrated in FIG. 12.

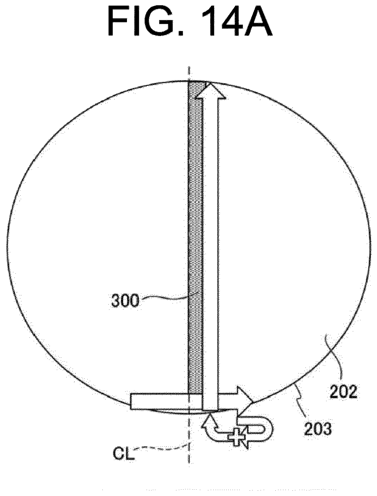

FIG. 14A is a schematic view for explaining a problem that occurs at the time of the direction change. In FIG. 14A, such a state is assumed where cleaning of the first area AR1 (see FIG. 13) has been completed and the cleaning machine 1 has run on the side surface 201 by making the 180° turn after the detection of the boundary 203. A cross mark in FIG. 14A indicates a side surface run-on detection point of the cleaning machine 1.

In FIG. 14A, the side-surface run-on detection point is located on a right side of a center line CL that bisects the bottom surface 202 in the lateral (right-left) direction. In this case, when the cleaning machine 1 makes the 90° turn (the ultra-pivotal turn) at the side surface run-on detection point, the cleaning start position for the second area AR2 is located on the right side of the center line CL. In this case, as it is understood with reference to FIG. 13, the second area AR2 is formed on the right side of the center line CL. For this reason, an uncleaned region 300 (see FIG. 14A) is generated although the uncleaned region 300 is originally assumed to be cleaned.

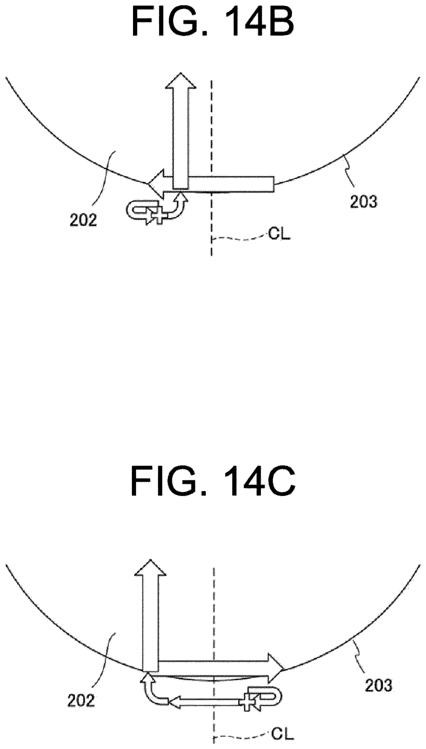

Meanwhile, in the case where the side-surface run-on detection point is located on a left side of the center line CL, the above-described uncleaned region 300 is not generated. FIG. 14B is a schematic view for explaining reference information related to FIG. 14A. In FIG. 14B, similarly to FIG. 14A, such a state is assumed where cleaning of the first area AR1 (see FIG. 13) has been completed and the cleaning machine 1 has run on the side surface 201 by making the 180° turn after the detection of the boundary 203. A cross mark in FIG. 14B indicates the side surface run-on detection point of the cleaning machine 1.

In FIG. 14B, the side surface run-on detection point is located on the left side of the center line CL. In this case, when the cleaning machine 1 makes the 90° turn (the ultra-pivotal turn) at the side surface run-on detection point, the cleaning start position for the second area AR2 is located on the left side of the center line CL. For this reason, in the example illustrated in FIG. 14B, the cleaning region becomes slightly larger than the originally assumed region. However, the uncleaned region 300 as illustrated in FIG. 14A is not generated.

FIG. 14C is a view for explaining a method for avoiding the problem that possibly occurs at the time of the direction change. In detail, FIG. 14C illustrates a method for avoiding the problem that has been described with reference to FIG. 14A. As it is understood from a comparison between FIG. 14A and FIG. 14B, the above-described uncleaned region 300 is generated when the turning direction of the 180° turn that is made after the detection of the boundary 203 is the clockwise direction. However, the uncleaned region 300 is not generated when the turning direction is the counterclockwise direction. For this reason, the problem avoidance method in FIG. 14C needs to be executed only when the side surface run-on is detected after the 180° turn in the clockwise direction. The turning direction of the cleaning machine 1 can be detected by referring to a change in the yaw angle of the posture sensor 1d.

In FIG. 14C, similarly to FIG. 14A, such a state is assumed where cleaning of the first area AR1 (see FIG. 13) has been completed and the cleaning machine 1 has run on the side surface 201 by making the 180° turn. A cross mark in FIG. 14C indicates the side surface run-on detection point of the cleaning machine 1. As illustrated in FIG. 14C, instead of making the 90° turn at the side surface run-on detection point, the cleaning machine 1 only needs to make the 90° turn after moving to the left side of the center line CL. As a result, the cleaning start position for the second area AR2 is located on the left side of the center line CL. Thus, it is possible to avoid the generation of the uncleaned region 300.

In order to adopt such a configuration that the cleaning machine 1 automatically moves to the left side of the center line CL and then makes the 90° turn, the change in the pitch angle may be used. More specifically, it may be configured that, in the case where the pitch angle of the cleaning machine 1 at the side surface run-on detection point is X°, the cleaning machine 1 makes the 90° turn at a position where the pitch angle is (X - 2X)°. With this configuration, the cleaning machine 1 turns 90° at such a position that the position and the side surface run-on detection point are line-symmetrical with respect to the center line CL.

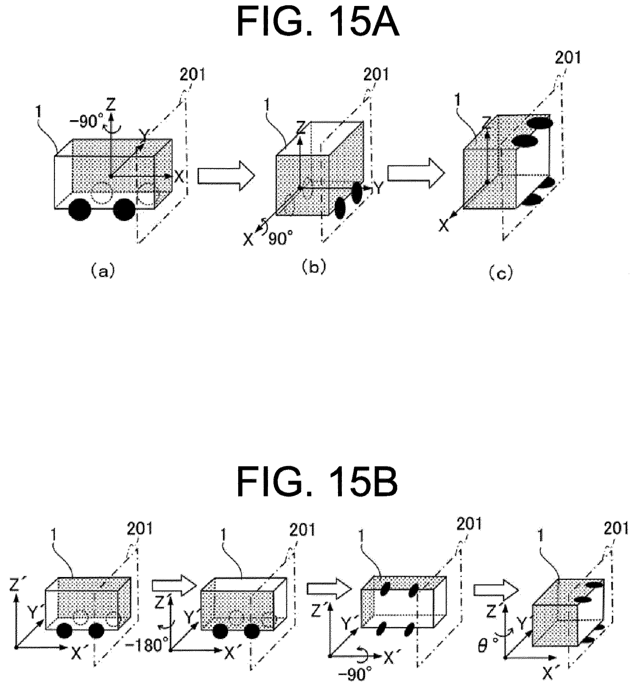

In the above example, the pitch angle during the movement of the cleaning machine 1 on the side surface is required. Hereinafter, a description will be mad on derivation of the pitch angle during the movement on the side surface with reference to FIGS. 15A and 15B. FIG. 15A includes schematic views illustrating a posture transition of the cleaning machine 1 in a machine body coordinate system. FIG. 15B includes schematic views illustrating the posture transition of the cleaning machine 1 in a fixed coordinate system.

The pitch angle of the cleaning machine 1 during the above-described movement on the side surface cannot originally be detected on the side surface 201. ZXY-system Euler angles are assumed. In the ZXY system, rotation about a Z-axis is set as the yaw angle, rotation about an X-axis is set as the roll angle, and rotation about the Y-axis is set as a pitch angle in the machine body coordinate system prior to running on the side surface. It is also assumed that an inclination angle of the side surface 201 is 90°. In this case, in order for the cleaning machine 1 to take a side surface run-on posture, it is necessary to rotate the Z-axis by-90° and the X-axis by 90° (see (a) and (b) in FIG. 15A). However, since the X-axis is rotated by 90°, the Y-axis and the Z-axis overlap each other to cause gimbal lock. Accordingly, the rotation of the Y-axis (the pitch angle) is output as the rotation of the Z-axis (the yaw angle) from the posture sensor (IMU) 1d after the cleaning machine 1 runs on the side surface 201. Thus, the posture sensor 1d does not output the pitch angle, and it appears that the pitch angle is not generated only with data generated by the posture sensor 1d. In addition, since the rotation about the Y-axis of the ZXY-system Euler angles is absorbed by the rotation about the Z-axis due to the gimbal lock, the ZXY-system Euler angles are expressed as ZXZ-system Euler angles.

For the above reason, in the present embodiment, in order to calculate the pitch angle during the gimbal lock, the machine body coordinate system is converted to the fixed coordinate system. By transposing a rotation matrix of the ZXZ-system Euler angles, the coordinates can be converted into a rotation matrix of Z'X'Z'-system fixed angles. Thus, it is possible to derive a posture parameters of the Z'X'Z'-system fixed angles from the respective components of the rotation matrix of the ZXZ-system Euler angles and the matrix (the rotation matrix of the Z'X'Z'-system fixed angles) acquired by transposing the rotation matrix of the ZXZ-system Euler angles.

When the posture parameters of the Z'X'Z'-system fixed angles are derived, a rotation amount of a first axis and a rotation amount of a second axis are known information on the fixed coordinate system. In order to acquire the same posture as that in (c) of FIG. 15A in the fixed coordinate system, it is necessary to rotate the first axis (the Z'-axis) by-180°, rotate the second axis (the X'-axis) by-90°, and rotate the third axis (the Z'-axis) by θ° (see FIG. 15B). The pitch angle of the cleaning machine 1 can be calculated from a rotation amount of the third axis. As illustrated in FIG. 15B, when the second axis (the X'-axis) is rotated, the side surface 201 is perpendicular to a rear surface of the cleaning machine 1. Thus, the pitch angle of the cleaning machine 1 after the rotation of the third axis (the Z'-axis) is (90 - θ)°. Thus-calculated (90-θ)° can be used as the pitch angle of the cleaning machine 1.

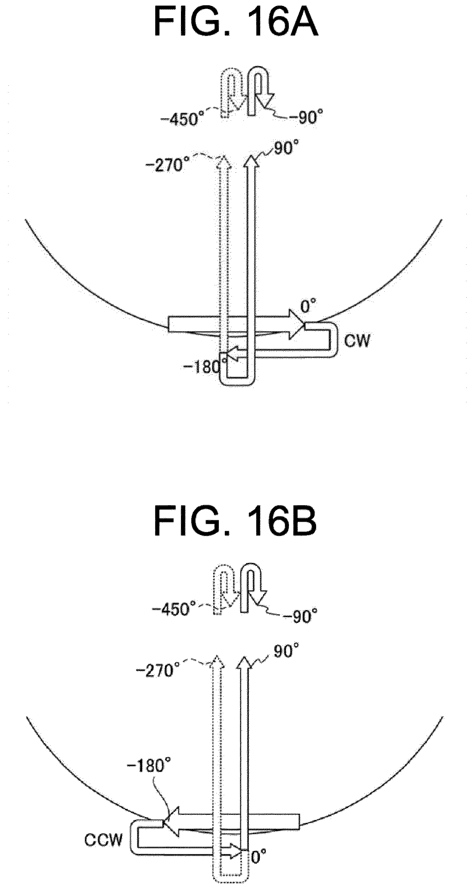

Next, a description will be made on the movement route of the cleaning machine 1 during the direction change with reference to FIGS. 16A and 16B. FIGS. 16A and 16B are schematic views, each of which explains the movement route at the time when the cleaning machine 1 changes the direction. In each of FIGS. 16A and 16B, solid arrows indicate the movement route in the present embodiment, and broken arrows indicate a movement route in a comparative example. In addition, in FIGS. 16A and 16B, angles in the drawings each indicate a twist angle of the cables 7, 8 that are connected to the cleaning machine 1. FIG. 16A illustrates a case where the 180° turn (a side surface run-on turn) as a cause of running on the side surface 201 is in the clockwise direction (CW). FIG. 16B illustrates a case where the side surface run-on turn is in the counterclockwise direction (CCW).

In the example illustrated in FIG. 16A, the twist angle of the cables 7, 8 before the side surface run-on turn (the 180° turn) in the clockwise direction is 0°. Here, it is assumed that, after the side surface run-on turn in the clockwise direction, the 90° turn is made in the clockwise direction, which is indicated by the broken arrow in FIG. 16A, for the direction change. In this case, the twist angle of the cables 7, 8 becomes -270° (= 0° + (-180°) + (-90°)) due to the 180° turn and the 90° turn in the clockwise direction. The twist angle of the cables 7, 8 reaches -450° (= (-270°) + (-180°)) including the 180° turn in the clockwise direction after the straight forward movement (the forward movement) that is made after the direction change. Since it is preferred to avoid the continuous rotation of the cables 7, 8 over 360° in the same direction, it is not preferred to make the 90° turn, which is indicated by the broken arrow, for the direction change.

For the above reason, in the present embodiment, it is configured to make a 270° turn in the counterclockwise direction, which is indicated by the solid line in FIG. 16A, for the direction change. In this case, the twist angle of the cables 7, 8 becomes 90° (= (-180°) + 270°) due to the 180° turn in the clockwise direction (the side surface run-on turn) and the 270° turn in the counterclockwise direction. The twist angle of the cables 7, 8 is -90° (= 90° + (-180°)) including the 180° turn in the clockwise direction after the straight forward movement (the forward movement) that is made after the direction change. That is, it is possible to minimize the twist of the cables 7, 8.

In the example illustrated in FIG. 16B, the twist angle of the cables 7, 8 before the side surface run-on turn (the 180° turn) in the counterclockwise direction is -180°. Here, it is assumed that, after the side surface run-on turn in the counterclockwise direction, the 270° turn is made in the clockwise direction, which is indicated by the broken arrow in FIG. 16B, for the direction change. In this case, the twist angle of the cables 7, 8 becomes -270° (= (-180°) + 180° + (-270°)) due to the 180° turn in the counterclockwise direction and the 270° turn in the clockwise direction. The twist angle of the cables 7, 8 reaches -450° (= (-270°) + (-180°)) including the 180° turn in the clockwise direction after the straight forward movement (the forward movement) that is made after the direction change. As described above, since it is preferred to avoid the continuous rotation of the cables 7, 8 over 360° in the same direction, it is not preferred to make the 270° turn, which is indicated by the broken arrow, for the direction change.

For the above reason, in the present embodiment, it is configured to make the 90° turn in the counterclockwise direction, which is indicated by the solid line in FIG. 16B, for the direction change. In this case, the twist angle of the cables 7, 8 becomes 90° (= (-180°) + 180° + 90°) due to the 180° turn (the side surface run-on turn) and the 90° turn in the counterclockwise direction. The twist angle of the cables 7, 8 is -90° (= 90° + (-180°)) including the 180° turn in the clockwise direction after the straight forward movement (the forward movement) that is made after the direction change. That is, it is possible to minimize the twist of the cables 7, 8.

As it is understood from the description so far, it is preferred to change the turning direction and the turning angle of the turn, which is made for the direction change, according to the turning direction of the immediately preceding 180° turn (the side surface run-on turn).

### 5. Notes, etc.

Various technical features disclosed in the present specification can be changed in various ways without departing from the spirit of the technical creation thereof. In addition, the plural embodiments and modifications described in the present specification may be combined to the extent possible.

### 6. Appendices

An exemplary underwater cleaning apparatus in the present specification includes: a cleaning machine that cleans a cleaning target while moving under water; a posture sensor that detects a posture of the cleaning machine; and a controller that executes movement control for the cleaning machine on the basis of information acquired from the posture sensor, in which the controller may be configured to determine a boundary between a bottom surface and a side surface of the cleaning target on the basis of a pitch angle of the cleaning machine acquired from the posture sensor (a first configuration).

In the underwater cleaning apparatus having the first configuration described above, the controller may be configured to cause the cleaning machine to make straight forward movement until the boundary is detected (a second configuration).

In the underwater cleaning apparatus having the first or second configuration described above, the controller may be configured to detect the boundary and change a direction of movement of the cleaning machine when the pitch angle falls out of a predetermined range (a third configuration).

In the underwater cleaning apparatus having any one of the first to third configurations described above, the controller may be configured that the controller is provided to be able to start the movement control for the cleaning machine from the side surface (a fourth configuration).

In the underwater cleaning apparatus having any one of the first to fourth configurations described above, the controller may be configured to cause the cleaning machine to turn 90° when detecting the boundary by first straight forward movement that is first straight forward movement on the bottom surface by the cleaning machine (a fifth configuration).

In the underwater cleaning apparatus having the fifth configuration described above, the controller may be configured to cause the cleaning machine, which has turned 90°, to make second straight forward movement plural times while making a 180° turn associated with detection of the boundary, the second straight forward movement being straight forward movement in a perpendicular direction to the first straight forward movement (a sixth configuration).

In the underwater cleaning apparatus having the sixth configuration described above, it may be configured that a turning direction of the 180° turn that is made between two times of the second straight forward movement is alternately reversed while the second straight forward movement is repeatedly made plural times (a seventh configuration).

In the underwater cleaning apparatus having the sixth or seventh configuration described above, the controller may be configured to cause the cleaning machine to make first backward movement prior to a turn that is made in association with detection of the boundary (an eighth configuration).

In the underwater cleaning apparatus having any one of the sixth to eighth configurations described above, the controller may be configured to cause the cleaning machine to make second backward movement after the cleaning machine turns (a ninth configuration).

In the underwater cleaning apparatus having any one of the sixth to ninth configurations described above, the controller may be configured to determine end of cleaning work on the bottom surface on the basis of a roll angle of the cleaning machine, which is acquired from the posture sensor, after the 180° turn (a tenth configuration).

In the underwater cleaning apparatus having any one of the first to fourth configurations described above, the controller may be configured to cause the cleaning machine to repeatedly execute a series of operation including: the straight forward movement on the bottom surface; a 180° turn upon detection of the boundary associated with the straight forward movement; a determination on running on the side surface by the cleaning machine after the 180° turn; follow-up straight forward movement in the case where running on the side surface is not determined; and a change of a direction of the straight forward movement in the case where running on the side surface is determined (an eleventh configuration).

In the underwater cleaning apparatus having the eleventh configuration described above, the controller may be configured to determine to terminate the series of operation on the basis of the number of running on the side surface by the cleaning machine (a twelfth configuration).

### REFERENCE SIGNS LIST

1 Cleaning machine
1d Posture sensor
2, 2A, 2B Controller
100 Underwater cleaning apparatus
200 Aquaculture net (cleaning target)
201 Side surface
202 Bottom surface
203 Boundary

## Claims

1. An underwater cleaning apparatus comprising:
a cleaning machine that cleans a cleaning target while moving under water;
a posture sensor that detects a posture of the cleaning machine; and
a controller that executes movement control for the cleaning machine on the basis of information acquired from the posture sensor, wherein
the controller determines a boundary between a bottom surface and a side surface of the cleaning target on the basis of a pitch angle of the cleaning machine acquired from the posture sensor.

2. The underwater cleaning apparatus according to claim 1, wherein
the controller causes the cleaning machine to make straight forward movement until the boundary is detected.

3. The underwater cleaning apparatus according to claim 2, wherein
when the pitch angle falls out of a predetermined range, the controller detects the boundary and changes a direction of movement of the cleaning machine.

4. The underwater cleaning apparatus according to claim 1, wherein
the controller is provided to be able to start the movement control for the cleaning machine from the side surface.

5. The underwater cleaning apparatus according to claim 3, wherein
when detecting the boundary by first straight forward movement that is first straight forward movement on the bottom surface by the cleaning machine, the controller causes the cleaning machine to turn 90°.

6. The underwater cleaning apparatus according to claim 5, wherein
the controller causes the cleaning machine, which has turned 90°, to make second straight forward movement plural times while making a 180° turn associated with detection of the boundary, the second straight forward movement being straight forward movement in a perpendicular direction to the first straight forward movement.

7. The underwater cleaning apparatus according to claim 6, wherein
a turning direction of the 180° turn that is made between two times of the second straight forward movement is alternately reversed while the second straight forward movement is repeatedly made plural times.

8. The underwater cleaning apparatus according to claim 6, wherein
prior to a turn that is made in association with detection of the boundary, the controller causes the cleaning machine to make first backward movement.

9. The underwater cleaning apparatus according to claim 6, wherein
after the cleaning machine turns, the controller causes the cleaning machine to make second backward movement.

10. The underwater cleaning apparatus according to claim 6, wherein
the controller determines end of cleaning work on the bottom surface on the basis of a roll angle of the cleaning machine, which is acquired from the posture sensor, after the 180° turn.

11. The underwater cleaning apparatus according to any one of claims 1 to 4, wherein
the controller causes the cleaning machine to repeatedly execute a series of operation including:
the straight forward movement on the bottom surface;
a 180° turn upon detection of the boundary associated with the straight forward movement;
a determination on running on the side surface by the cleaning machine after the 180° turn;
follow-up straight forward movement in the case where running on the side surface is not determined; and
a change of a direction of the straight forward movement in the case where running on the side surface is determined.

12. The underwater cleaning apparatus according to claim 11, wherein
the controller determines to terminate repetition of the series of operation on the basis of the number of running on the side surface by the cleaning machine.
